# FASCICULE DE BREVET EUROPEEN

(11) **EP 3 999 722 B1**
(45) Date de publication et mention de la délivrance du brevet: **21.02.2024**
(21) Numéro de dépôt: 20754320.8
(22) Date de dépôt: 10.07.2020
(51) Int. Cl.: F01D 25/24, F02C 7/04

(54) **PROCEDE DE FABRICATION D'UN CARTER POUR UNE TURBOMACHINE D'AERONEF**
VERFAHREN ZUR HERSTELLUNG EINES GEHÄUSES FÜR EINEN FLUGZEUGTRIEBWERKSMOTOR
METHOD FOR PRODUCING A CASING FOR AN AIRCRAFT TURBINE ENGINE

(30) Priorité: 15.07.2019 US 201962874385 P
(43) Date de publication de la demande: 25.05.2022
(73) Titulaire: SAFRAN AIRCRAFT ENGINES, 75015 Paris (FR); Safran Aerospace Composites, Rochester, New Hampshire 03867 (US)
(72) Inventeur: FIORE, Vincent, Pascal, 77550 Moissy-Cramayel (FR); FRISONI, Gatien, 77550 Moissy-Cramayel (FR); MAXWELL, Foster, Alexander, Conway, New Hampshire 03818 (US); MESERVE, Steven, Ossipee, New Hampshire 03824 (US); SHERMAN, Jeffrey, Steven, Durham, New Hampshire 03824 (US)
(74) Mandataire: Gevers & Orès
(86) Numéro de dépôt international: PCT/FR2020/051258
(87) Numéro de publication internationale: WO 2021/009457

(56) Documents cités:
- EP-A1- 2 813 672
- FR-A1- 2 993 490
- FR-A1- 3 026 674
- FR-A1- 3 059 044
- US-A1- 2018 169 972

## Description

### Domaine technique de l'invention

La présente invention concerne la fabrication d'un carter, en particulier de soufflante, pour une turbomachine d'aéronef.

### Arrière-plan technique

L'état de la technique comprend notamment les documents FR-A1-2 997 725, FR-A1-2 997 726, FR-A1-3 005 100, FR-A1-3 059 044, US-A1-2018/169972, EP-A1-2 813 672 et FR-A1-3 060 7438.

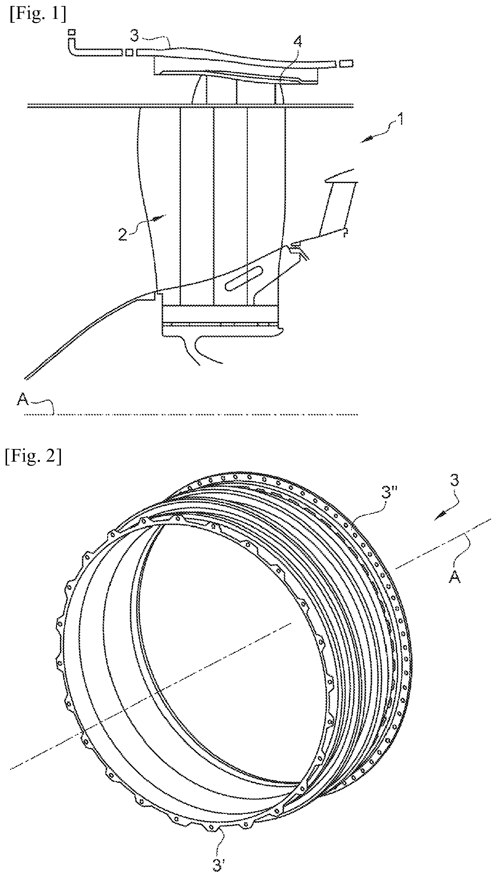

La figure 1 représente partiellement une soufflante d'une turbomachine d'aéronef.

De façon classique, une turbomachine comprend d'amont en aval, c'est-à-dire dans le sens d'écoulement des flux de gaz, une soufflante, un ou plusieurs compresseurs, une chambre de combustion, une ou plusieurs turbines, et une tuyère d'éjection des gaz de combustion sortant de la ou des turbines.

La soufflante 1 comporte une roue à aubes 2 qui est entourée par un carter 3 de soufflante, encore appelé carter de rétention du fait de sa fonction de rétention des aubes en cas de rupture de celles-ci, ou en cas d'entrée de débris dans la soufflante.

Comme cela est visible sur la figure 2, le carter de soufflante 3 comprend typiquement une enveloppe annulaire d'axe de révolution A qui s'étend autour des aubes de soufflante 2 de la turbomachine. Cette enveloppe comprend une bride annulaire de fixation 3', 3" à chacune de ses extrémités axiales. Ces brides 3', 3" sont utilisées pour fixer le carter 3 à des parois annulaires de la nacelle de la turbomachine.

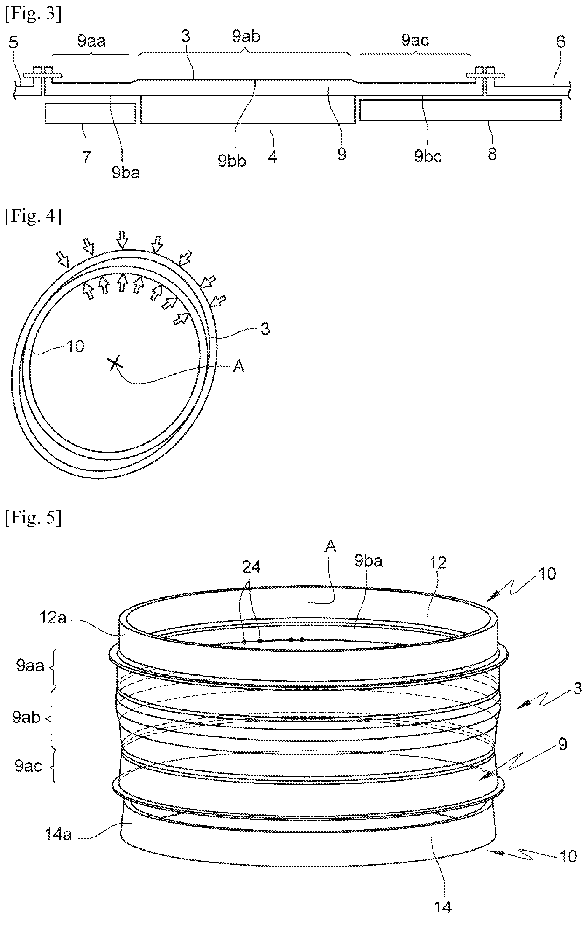

La figure 3 est une coupe à caractère schématique illustrant un carter de soufflante 3 selon l'art antérieur.

Le carter de soufflante 3 est lié, à l'amont, à une manche d'entrée d'air 5, et, à l'aval, à une virole 6 de carter intermédiaire. Le carter porte également des panneaux acoustiques amont 7 et des panneaux acoustiques aval 8. Le carter de soufflante 3 comporte encore une couche annulaire 4 de matière abradable 4, positionnée sur une surface annulaire interne de l'enveloppe, entre les panneaux amont 7 et les panneaux aval 8.

En plus de la fonction de rétention, le carter de soufflante 3 est également conçu pour :
- assurer une continuité mécanique (des efforts et des moments) entre la manche d'entrée d'air 5 et la virole 6 de carter intermédiaire ;
- permettre la fixation des panneaux 7, 8 et de la couche 4,
- permettre la fixation d'équipements et de supports connus en soi;
- tenir les spécifications de règlementation au feu et aux fuites ;
- permettre une continuité du courant électrique pour la tenue à la foudre, etc.

On a déjà proposé de fabriquer l'enveloppe du carter de soufflante en matériau composite à partir de fibres tissées et noyées dans une résine polymérique, le procédé de fabrication étant du type par « RTM » (acronyme anglais de « *Resin Transfert Molding* »)*.*

Dans un procédé RTM, un moule comportant deux demi-coquilles, posées l'une sur l'autre, confinent une cavité de moulage. Les fibres sont tissées en trois dimensions et forment une préforme fibreuse qui est insérée dans la cavité du moule entre les deux demi-coquilles, avant injection de la résine.

La polymérisation de la résine est réalisée en maintenant fermées les deux demi-coquilles. Selon la cadence de production souhaitée, la polymérisation est réalisée à température ambiante ou par chauffage.

L'utilisation d'un tel procédé est particulièrement avantageuse car il permet de réaliser des pièces ayant une masse globale moins élevée que ces mêmes pièces lorsqu'elles sont réalisées en matériau métallique, tout en présentant une résistance mécanique au moins équivalente sinon supérieure.

Toutefois, il peut être observé en sortie de moule, c'est-à-dire lors de l'extraction de la pièce fabriquée, une déformation vis-à-vis de la géométrie nominale théorique. On peut ainsi, à titre d'exemple, observer pour un carter de soufflante, un défaut vis-à-vis d'une géométrie circulaire théorique, se présentant sous la forme de l'apparition d'une ovalisation de cette pièce lors de son extraction du moule.

Ce type de déformation engendre des problématiques de type : assemblage (jeu d'assemblage entre les composants), fabrication (usinage hétérogène sur la pièce), adaptation nécessaire des autres pièces à la forme ovale du carter (ex : couche abradable), tenue mécanique (propriétés mécaniques hétérogènes), aérodynamique (veine aérodynamique hétérogène), etc.

De tels défauts peuvent notamment s'expliquer par le fait que des contraintes résiduelles s'appliquent à la pièce durant sa fabrication dans le moule (ex : gradient de polymérisation, tension d'enroulement pour une pièce en matériau composite), et sont relâchées lors de l'extraction de la pièce du moule, conduisant alors à une déformation de la pièce extraite.

Pour parer à cet inconvénient, il est connu d'utiliser au moins un moule comprenant une cavité de moulage dont la géométrie ne correspond pas à la géométrie nominale de la pièce à fabriquer mais à une géométrie pour laquelle la déformation a été prise en compte, de sorte à finalement obtenir lors de l'extraction de cette pièce du moule, la géométrie nominale de la pièce.

Avantageusement, un tel procédé peut ainsi permettre de contrer l'ovalisation d'une pièce de révolution en sortie de moule. Cependant, lors de la fabrication d'un carter de soufflante, l'ovalisation observée de celui-ci ne survient pas uniquement lors de son extraction du moule. La fabrication du carter implique en effet par la suite diverses opérations successives, telles des opérations d'usinage (ex : détourage, perçage) et de collage (de la couche abradable par exemple).

Les opérations d'usinage conduisent à la libération de contraintes physiques pouvant favoriser des déformations du carter. Les opérations de collage sont quant à elles couramment réalisées en étuve. Ces opérations de collage impliquent des étapes de montée en température et de mise en pression du carter, suivies d'une étape de refroidissement de celui-ci. L'ensemble de ces étapes conduisent aussi à l'apparition de contraintes agissant sur l'ovalisation du carter. Diverses ovalisations du carter peuvent donc apparaître tout au long de son processus de fabrication et tendent alors à se cumuler. L'état de l'art existant apparait alors comme insuffisant pour contrer l'ovalisation du carter de soufflante lors de sa fabrication, étant donné que l'apparition de cette ovalisation ne survient pas uniquement lors de l'extraction du carter de sa cavité de moulage mais aussi au cours d'étapes d'usinage et de collage.

La présente invention propose une solution pour limiter le risque d'ovalisation d'un carter de soufflante, lors d'une opération de collage d'une couche annulaire abradable.

Lors de cette opération, le carter est logé dans une étuve comme évoqué dans ce qui précède, et une partie du système de mise en pression est monté à l'intérieur du carter pour l'application d'une pression sur la couche abradable, radialement de l'intérieur vers l'extérieur. Ce système peut en outre permettre de garantir une température de traitement constante lors de l'opération. Ce système est relativement encombrant et empêche d'utiliser les solutions connues de l'art antérieur, telles que celle du document FR-A1-3 060 7438, consistant à prévoir plusieurs pièces annulaires (jantes, flasques, tambours, vessies, etc.) à l'intérieur du carter, qui occupent tout l'espace dans le carter.

La présente invention propose une solution simple, efficace et économique à ce problème.

### Résumé de l'invention

L'invention concerne un procédé de fabrication d'un carter de turbomachine d'aéronef, ce carter comportant :
- une enveloppe annulaire s'étendant autour d'un axe A et réalisée dans un matériau composite comportant des fibres tissées et noyées dans une résine,
- une couche annulaire comportant un matériau abradable disposée à l'intérieur de l'enveloppe, et recouvrant une première surface annulaire interne d'un tronçon intermédiaire de l'enveloppe,

le procédé comprenant une étape de collage de la couche sur la première surface, lors de laquelle le carter est chauffé et comprimé par l'intermédiaire d'un système présent au moins en partie à l'intérieur du carter,
caractérisé en ce que, préalablement au chauffage et à la compression du carter, un outillage de mise en forme est monté à l'intérieur du carter et est constitué de deux anneaux, à savoir un premier anneau disposé à l'intérieur de l'enveloppe, et recouvrant une seconde surface annulaire interne d'un tronçon d'extrémité de l'enveloppe, et un second anneau disposé à l'intérieur de l'enveloppe, et recouvrant une troisième surface annulaire interne d'un autre tronçon d'extrémité de l'enveloppe, ledit tronçon intermédiaire étant disposé entre les deux tronçons d'extrémité.

La mise en forme du carter de soufflante est donc assurée par seulement deux anneaux qui sont respectivement montés à l'intérieur des deux tronçons d'extrémité de l'enveloppe composite du carter. Ces éléments de mise en forme sont donc simples car ils ont une forme annulaire et n'encombrent pas l'intérieur et le centre du carter qui peut ainsi être traversé par une partie du système nécessaire au chauffage et/ou à la mise en pression du carter lors du collage de la couche abradable.

Le procédé selon l'invention peut comprendre une ou plusieurs des caractéristiques suivantes, considérées indépendamment les unes des autres ou en combinaison les unes avec les autres :
- le carter est soumis à une pression comprise entre 1 et 10 bars, et de préférence entre 2 et 6 bars, lors de la compression ;
- le carter est soumis à une température comprise entre 25 et 300°C, et de préférence entre 80 et 200°C, lors du chauffage ;
- le carter est soumis au chauffage et à la compression pendant une durée comprise entre 60 et 500 minutes, et de préférence entre 180 et 300 minutes ;
- les anneaux sont sectorisés et comprennent chacun des secteurs d'anneau disposés circonférentiellement bout à bout et comportant des extrémités circonférentielles se chevauchant mutuellement ;
- les extrémités circonférentielles comprennent des premiers orifices traversants de passage d'organes de fixation ;
- les premiers orifices des anneaux sont alignés avec des seconds orifices de l'enveloppe, les organes de fixation étant vissés dans ou à travers ces seconds orifices ;
- les anneaux ont chacun un diamètre compris entre 1000 et 3000mm, et de préférence entre 1500 et 2500mm, et/ou une dimension axiale comprise entre 50 et 300mm, et de préférence entre 100 et 200mm, et/ou une épaisseur radiale comprise entre 10 et 100mm, et de préférence entre 20 et 50mm ;
- le procédé comprend, après le chauffage et la compression, le démontage et le retrait des anneaux ;
- le carter est disposé dans un autoclave lors du chauffage.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig. 1] La figure 1 déjà discutée montre partiellement une vue en coupe d'une soufflante d'une turbomachine d'aéronef selon l'état de la technique ;
[Fig. 2] La figure 2 déjà discutée montre une vue en perspective d'un carter de soufflante selon l'état de la technique ;
[Fig. 3] La figure 3 déjà discutée montre une coupe partielle à caractère schématique d'un carter de soufflante selon l'état de la technique ;
[Fig. 4] La figure 4 est une vue très schématique en coupe transversale d'un carter selon l'invention, et illustrant son risque d'ovalisation ;
[Fig. 5] La figure 5 est une vue en perspective d'un carter de soufflante ainsi que de deux anneaux de mise en forme ;
[Fig. 6] La figure 6 est une vue en perspective et en coupe axiale du carter de soufflante et des anneaux de mise en forme de la figure 5, en position assemblée ;
[Fig. 7] La figure 7 est une vue en perspective et en coupe axiale des anneaux de mise en forme de la figure 5 ; et
[Fig. 8] La figure 8 est une vue en perspective et à plus grande échelle des extrémités circonférentielles de deux secteurs d'un des anneaux de mise en forme de la figure 5.

### Description détaillée de l'invention

Dans la description qui suit, l'invention est appliquée à un carter de soufflante 3. L'invention n'est toutefois pas limitée à ce type de carter et peut être appliquée à d'autres carters d'une turbomachine.

Le carter 3 auquel le procédé selon l'invention est appliqué à une forme générale annulaire autour d'un axe A. Ce carter 3 comprend :
- une enveloppe annulaire 9 s'étendant autour de l'axe A et réalisée dans un matériau composite comportant des fibres tissées et noyées dans une résine, et
- une couche annulaire 4 comportant un matériau abradable disposée à l'intérieur de l'enveloppe 9, et recouvrant une première surface annulaire interne 9ab d'un tronçon intermédiaire 9bb de l'enveloppe (figure 3).

La couche annulaire 4 est destinée à être fixée par collage sur la première surface interne 9bb de l'enveloppe 9. Cette couche 4 peut comprendre une structure sandwich comportant une peau annulaire portant un revêtement annulaire abradable. Comme évoqué dans ce qui précède, lors de cette étape de collage, le carter 3 est chauffé et comprimé et susceptible de s'ovaliser (figure 4). Pour éviter cette ovalisation, l'invention propose un outillage 10 spécifique qui est disposé à l'intérieur du carter 3 et qui permet de mettre en forme le carter 3 lors de l'opération de collage, pendant laquelle le carter 3 est soumis à un traitement thermique sous pression.

Les figures 5 à 8 illustrent un mode de réalisation de cet outillage 10 qui est constitué de deux anneaux 12, 14. A l'exception des organes utilisés pour maintenir les anneaux 12, 14, et les fixer éventuellement au carter 3, l'outillage 10 ne comprend pas d'autres pièces et est donc relativement simple.

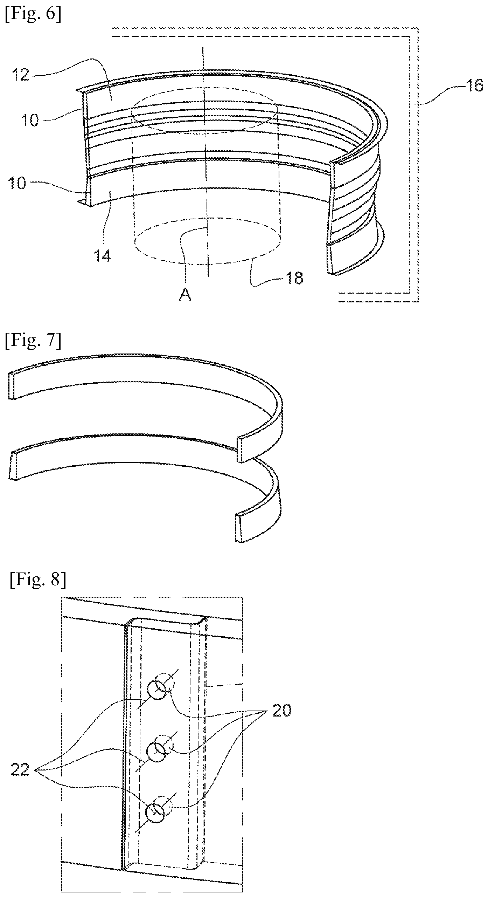

En pratique, lors de l'opération de collage, le carter 3 est disposé dans un autoclave 16 de façon à ce que son axe A soit orienté verticalement. Un système 18 de mise en pression est monté à l'intérieur du carter 3, ce système 18 étant schématiquement représenté à la figure 6. Ce système 18 occupe une partie de l'espace interne du carter 3 et l'outillage 10 est conçu pour tenir compte de cette contrainte.

Un premier anneau 12, par exemple supérieur, est disposé à l'intérieur de l'enveloppe 9 du carter 3, et recouvre une seconde surface annulaire interne 9ba d'un tronçon d'extrémité 9aa de l'enveloppe, et un second anneau 14, par exemple inférieur, est disposé à l'intérieur de l'enveloppe, et recouvre une troisième surface annulaire interne 9bc d'un autre tronçon d'extrémité 9ac de l'enveloppe. Le tronçon intermédiaire 9ab de l'enveloppe dont la surface interne 9bb est recouverte par la couche abradable 4, est disposé entre les deux tronçons d'extrémité 9aa, 9ac (Figures 3 et 5).

Les anneaux 12, 14 ne sont pas forcément identiques. Ils sont chacun conformés et dimensionnés en fonction de la forme et des dimensions de la surface 9ba, 9bc sur laquelle ils sont appliqués. L'anneau supérieur 12 peut par exemple avoir une surface externe 12a de forme cylindrique, alors que l'anneau inférieur 14 peut avoir une surface externe 14a de forme tronconique. Les surfaces 12a et 9ba, d'une part, et 14a et 9bc, d'autre part, sont donc complémentaires.

Comme illustré dans les dessins, les anneaux 12, 14 sont de préférence sectorisés pour faciliter leur montage dans le carter 3. En effet, dans le cas où ils seraient monoblocs, il pourrait être difficile voire impossible de les monter dans le carter si ce dernier est déjà ovalisé. Ils peuvent chacun comprendre au moins deux secteurs disposés circonférentiellement bout à bout.

La figure 8 montre que les extrémités circonférentielles des secteurs d'un anneau 12, 14 se chevauchent mutuellement et peuvent comprendre des orifices 20 de passage d'organes 22 de fixation du type vis-écrou par exemple. Chaque secteur d'anneau est donc fixé à un ou plusieurs secteurs adjacents au niveau de ses extrémités circonférentielles.

Pour garantir un positionnement précis des anneaux 12, 14 dans le carter 3, il est de plus envisageable d'aligner les orifices 20 des anneaux avec des orifices 24 de l'enveloppe 9 (figure 5). Les organes de fixation 22 traversent alors les orifices 20 des secteurs et peuvent être vissés dans les orifices 24 de l'enveloppe, ou traverser ces orifices pour recevoir par exemple des écrous. Les orifices 24 de l'enveloppe sont par exemple ceux qui sont destinés à être utilisés pour solidariser à l'enveloppe les panneaux d'isolation acoustiques 7, 8 évoqués dans ce qui précède et représentés à la figure 3.

En variante, les secteurs d'anneau pourraient être fixés entre eux par d'autres types d'organes.

Les anneaux 12, 14 sont de préférence ovalisés dans un matériau plus rigide que celui de l'enveloppe. Ils sont par exemple métalliques.

Dans un exemple particulier de réalisation de l'invention, les anneaux 12, 14 ont chacun :
- un diamètre compris entre 1000 et 3000mm, et de préférence entre 1500 et 2500mm,
- une dimension axiale comprise entre 50 et 300mm, et de préférence entre 100 et 200mm, et
- une épaisseur radiale comprise entre 10 et 100mm, et de préférence entre 20 et 50mm.

Les anneaux 12, 14 sont ainsi disposés à l'intérieur du carter 3 et sur les surfaces 9ba, 9bc de l'enveloppe 9 pour éviter une ovalisation du carter lors de l'étape de collage de la couche abradable 4, pendant laquelle le carter est soumis à un double traitement thermique et de mise en pression.

Lors de cette opération, le carter 3 peut être soumis à une pression comprise entre 1 et 10 bars, et de préférence entre 2 et 6 bars. Cette mise en pression peut être réalisée en soumettant le carter à un vide, par exemple entre deux éléments annulaires disposés respectivement à l'intérieur de la couche abradable et à l'extérieur de l'enveloppe. Le carter 3 peut être soumis à une température comprise entre 25 et 300°C, et de préférence entre 80 et 200°C. Cette opération peut être réalisée lors d'un cycle ayant une durée comprise entre 60 et 500 minutes, et de préférence entre 180 et 300 minutes.

A la fin de cette opération, la température et la pression auxquelles le carter 3 est soumis sont abaissées. Après refroidissement complet du carter 3, la couche abradable est collée et fixée sur l'enveloppe 9, et les anneaux 12, 14 peuvent être démontés et retirés.

L'invention apporte des avantages à plusieurs niveaux. D'un point de vue technique, il n'y a plus besoin de prendre en compte l'effet d'ovalisation lors de la définition de l'enveloppe. D'un point de vue industriel, il n'y a plus besoin d'usinage à façon sur la couche abradable ni sur l'enveloppe. La fabrication et l'assemblage du carter sont simplifiés et son contrôle tridimensionnel également. L'invention permet ainsi d'améliorer les performances mécanique et aérodynamique du carter, ainsi que son procédé de fabrication et de gagner en temps de cycle global.

## Revendications

1. Procédé de fabrication d'un carter (3) de turbomachine d'aéronef, ce carter comportant :
- une enveloppe annulaire (9) s'étendant autour d'un axe A et réalisée dans un matériau composite comportant des fibres tissées et noyées dans une résine,
- une couche annulaire (4) comportant un matériau abradable disposée à l'intérieur de l'enveloppe, et recouvrant une première surface annulaire interne (9bb) d'un tronçon intermédiaire (9ab) de l'enveloppe,
le procédé comprenant une étape de collage de la couche sur la première surface, lors de laquelle le carter est chauffé et comprimé par l'intermédiaire d'un système présent au moins en partie à l'intérieur du carter,
**caractérisé en ce que**, préalablement au chauffage et à la compression du carter, un outillage (10) de mise en forme est monté à l'intérieur du carter et est constitué par deux anneaux (12, 14), à savoir un premier anneau (12) disposé à l'intérieur de l'enveloppe, et recouvrant une seconde surface annulaire interne (9ba) d'un tronçon d'extrémité (9aa) de l'enveloppe, et un second anneau (14) disposé à l'intérieur de l'enveloppe, et recouvrant une troisième surface annulaire interne (9bc) d'un autre tronçon d'extrémité (9ac) de l'enveloppe, ledit tronçon intermédiaire étant disposé entre les deux tronçons d'extrémité.

2. Procédé selon la revendication 1, dans lequel le carter (3) est soumis à une pression comprise entre 1 et 10 bars, et de préférence entre 2 et 6 bars, lors de la compression.

3. Procédé selon la revendication 1 ou 2, dans lequel le carter (3) est soumis à une température comprise entre 25 et 300°C, et de préférence entre 80 et 200°C, lors du chauffage.

4. Procédé selon l'une des revendications précédentes, dans lequel le carter (3) est soumis au chauffage et à la compression pendant une durée comprise entre 60 et 500 minutes, et de préférence entre 180 et 300 minutes.

5. Procédé selon l'une des revendications précédentes, dans lequel les anneaux (12, 14) sont sectorisés et comprennent chacun des secteurs d'anneau disposés circonférentiellement bout à bout et comportant des extrémités circonférentielles se chevauchant mutuellement.

6. Procédé selon la revendication précédente, dans lequel les extrémités circonférentielles comprennent des premiers orifices (20) traversants de passage d'organes de fixation (22).

7. Procédé selon la revendication précédente, dans lequel les premiers orifices (20) des anneaux (12, 14) sont alignés avec des seconds orifices (24) de l'enveloppe, les organes de fixation (22) étant vissés dans ou à travers ces seconds orifices.

8. Procédé selon l'une des revendications précédentes, dans lequel les anneaux(12, 14) ont chacun :
- un diamètre compris entre 1000 et 3000mm, et de préférence entre 1500 et 2500mm,
- une dimension axiale comprise entre 50 et 300mm, et de préférence entre 100 et 200mm, et
- une épaisseur radiale comprise entre 10 et 100mm, et de préférence entre 20 et 50mm.

9. Procédé selon l'une des revendications précédentes, dans lequel il comprend, après le chauffage et la compression, le démontage et le retrait des anneaux (12, 14).

10. Procédé selon l'une des revendications précédentes, dans lequel le carter (3) est disposé dans un autoclave (16) lors du chauffage.

## Patentansprüche

1. Verfahren zur Herstellung eines Gehäuses (3) eines Flugzeugtriebwerkmotors, wobei dieses Gehäuse Folgendes umfasst:
- eine ringförmige Schale (9), die sich um eine Achse A erstreckt und aus einem Verbundmaterial gefertigt ist, das gewebte und in einem Harz getauchte Fasern umfasst;
- eine ringförmige Schicht (4), die ein abreibbares Material umfasst, die im Inneren der Schale angeordnet ist und eine erste innere ringförmige Oberfläche (9bb) eines mittleren Teilabschnitts (9ab) der Schale abdeckt,
wobei das Verfahren einen Schritt des Klebens der Schicht auf die erste Oberfläche umfasst, bei dem das Gehäuse mithilfe eines zumindest teilweise im Inneren des Gehäuses vorhandenen Systems erhitzt und komprimiert wird,
**dadurch gekennzeichnet, dass** vor der Erhitzung und der Komprimierung des Gehäuses, ein Werkzeug (10) zur Formgebung im Inneren des Gehäuses montiert wird und aus zwei Ringen (12, 14) besteht, nämlich einem ersten Ring (12), der im Inneren der Schale angeordnet ist und eine zweite innere ringförmige Oberfläche (9ba) eines Endteilabschnitts (9aa) der Schale abdeckt, und einem zweiten Ring (14), der im Inneren der Schale angeordnet ist und eine dritte innere ringförmige Oberfläche (9bc) eines anderen Endteilabschnitts (9ac) der Schale abdeckt, wobei der mittlere Teilabschnitt zwischen den zwei Endteilabschnitten angeordnet ist.

2. Verfahren nach Anspruch 1, wobei das Gehäuse (3) bei der Komprimierung einem Druck zwischen 1 und 10 bar und vorzugsweise zwischen 2 und 6 bar unterzogen wird.

3. Verfahren nach Anspruch 1 oder 2, wobei das Gehäuse (3) bei der Erhitzung einer Temperatur zwischen 25 und 300°C und vorzugsweise zwischen 80 und 200°C unterzogen wird.

4. Verfahren nach einem der vorstehenden Ansprüche, wobei das Gehäuse (3) der Erhitzung und der Komprimierung während einer Dauer zwischen 60 und 500 Minuten und vorzugsweise zwischen 180 und 300 Minuten unterzogen wird.

5. Verfahren nach einem der vorstehenden Ansprüche, wobei die Ringe (12, 14) sektorisiert werden und jeweils Ringsektoren umfasst, die umlaufend Ende an Ende angeordnet werden und umlaufende Enden umfassen, die sich gegenseitig überlappen.

6. Verfahren nach dem vorstehenden Anspruch, wobei die umlaufenden Enden erste Durchgangsöffnungen (20) zum Durchführen von Befestigungsorganen (22) umfassen.

7. Verfahren nach dem vorstehenden Anspruch, wobei die ersten Öffnungen (20) der Ringe (12, 14) mit den zweiten Öffnungen (24) der Schale ausgerichtet werden, wobei die Befestigungsorgane (22) in oder durch diese zweiten Öffnungen hindurch geschraubt werden.

8. Verfahren nach einem der vorstehenden Ansprüche, wobei die Ringe (12, 14) jeweils Folgendes aufweisen:
- einen Durchmesser zwischen 1000 und 3000 mm und vorzugsweise zwischen 1500 und 2500 mm,
- eine axiale Abmessung zwischen 50 und 300 mm und vorzugsweise zwischen 100 und 200 mm, und
- eine radiale Dicke zwischen 10 und 100 mm und vorzugsweise zwischen 20 und 50 mm.

9. Verfahren nach einem der vorstehenden Ansprüche, wobei es den Abbau und die Entnahme der Ringe (12, 14) nach der Erhitzung und der Komprimierung umfasst.

10. Verfahren nach einem der vorstehenden Ansprüche, wobei das Gehäuse (3) bei der Erhitzung in einem Autoklav (16) angeordnet wird.

## Claims

1. Method for manufacturing a casing (3) of an aircraft turbomachine, said casing comprising:
- an annular shell (9) extending about an axis A and made of a composite material comprising fibres that are woven and immersed in a resin,
- an annular layer (4) comprising an abradable material arranged inside the shell, and covering a first inner annular surface (9bb) of an intermediate section (9ab) of the shell,
the method comprising a step of gluing the layer on the first surface, during which the casing is heated and compressed by means of a system that is present at least partially inside the casing,
**characterised in that**, prior to the heating and compression of the casing, a forming tool (10) is mounted inside the casing and made of two rings (12, 14), i.e. a first ring (12) arranged inside the shell, and covering a second inner annular surface (9ba) of an end section (9aa) of the shell, and a second ring (14) arranged inside the shell, and covering a third inner annular surface (9bc) of another end section (9ac) of the shell, said intermediate section being arranged between the two end sections.

2. Method according to claim 1, wherein the casing (3) undergoes a pressure ranging from 1 to 10 bars, and preferably from 2 to 6 bars, during the compression.

3. Method according to claim 1 or 2, wherein the casing (3) undergoes a temperature ranging from 25 to 300°C, and preferably from 80 to 200°C, during the heating.

4. Method according to one of the preceding claims, wherein the casing (3) undergoes the heating and the compression for a duration ranging from 60 to 500 minutes, preferably from 180 to 300 minutes.

5. Method according to any of the preceding claims, wherein the rings (12, 14) are divided into sectors and each comprises ring sectors arranged circumferentially end-to-end and comprising circumferential ends that overlap mutually.

6. Method according to the preceding claim, wherein the circumferential ends comprise first through-orifices (20) for the passage of attachment members (22).

7. Method according to the preceding claim, wherein the first orifices (20) of the rings (12, 14) are aligned with second orifices (24) of the shell, the attachment members (22) being screwed in or through these second orifices.

8. Method according to any of the preceding claims, wherein the rings (12, 14) each have:
- a diameter ranging from 1000 to 3000mm, and preferably from 1500 to 2500mm,
- an axial dimension ranging from 50 to 300mm, and preferably from 100 to 200mm, and
- a radial thickness ranging from 10 to 100mm, and preferably from 20 to 50mm.

9. Method according to any of the preceding claims, wherein it comprises, after the heating and the compression, the disassembly and removal of the rings (12, 14).

10. Method according to one of the preceding claims, wherein the casing (3) is placed in an autoclave (16) during the heating process.
